# EUROPEAN PATENT APPLICATION

(11) **EP 2 891 964 A1**
(43) Date of publication of application: **08.07.2015**
(21) Application number: 15150021.2
(22) Date of filing: 02.01.2015
(51) Int. Cl.: G06F 3/0481, G06F 3/0482, G06F 3/0484

(54) **Systems and methods of displaying and navigating program content based on a helical arrangement of icons**

(30) Priority: 03.01.2014 US 201461923470 P; 19.12.2014 US 201414577269
(71) Applicant: OpenTV, Inc., San Francisco, CA 94111 (US)
(72) Inventor: Chai, Crx, San Francisco, CA 94111 (US); Fishman, Alex, San Francisco, CA 94111 (US); Chellin, Isaac, San Francisco, CA 94111 (US); Fong, Jonathan, San Francisco, CA 94111 (US)
(74) Representative: Keane, Paul Fachtna

(57) **Abstract**

A device for enabling content selection is configured to display icons representing items of content. The icons may be displayed using a helical structure. A device may enable a user to select icons with a helical structure. A device may enable a user to navigate icons presented in the foreground of a helical structure. A user navigating icons in the foreground of a helical structure may cause new icons to be presented in the background of the helical structure.

## Description

### RELATED APPLICATIONS

This application claims the benefit of U.S. Provisional Application No. 61/923,470, filed on January 3, 2014, which is incorporated by reference in its entirety.

### TECHNICAL FIELD

The present disclosure relates to the field of interactive television and graphical user interfaces.

### BACKGROUND

Digital media playback capabilities may be incorporated into a wide range of devices, including digital televisions, including so-called "smart" televisions, set-top boxes, laptop or desktop computers, tablet computers, e-book readers, digital recording devices, digital media players, video gaming devices, digital cameras, cellular phones, including so-called "smart" phones, dedicated video streaming devices, and the like. Digital media content may originate from a plurality of sources including, for example, over-the-air television providers, satellite television providers, cable television providers, online media-sharing services, including, online media streaming and downloading services, peer devices, and the like. Further, devices with digital media playback capabilities may be configured to output digital media to ultra-resolution displays.

Due to the wide range of content users may access on devices with digital media playback capabilities, traditional techniques for organizing, sorting, and displaying available content choices may be less than ideal, particularly for televisions and secondary connected devices. Traditional electronic programming guides may be intended to be displayed on relatively smaller and/or lower resolution displays than displays that are currently available or may be become available in the future. Further, the presentation of available programming content within a traditional electronic programming guide has typically been limited to a two-dimensional user interface. Traditional electronic programming guides typically only allow users to navigate programming content using a two-dimensional grid based system where programming in the grid is primarily sorted by time and channel. When using a traditional graphical user interface, even with a high resolution display, users are limited to viewing and navigating a small amount of available content at a time.

### SUMMARY

The following brief summary is not intended to include all features and aspects of the present invention, nor does it imply that the invention must include all features and aspects discussed in this summary. The present disclosure relates to the field of graphical user interfaces and more specifically describes techniques and tools for enhancing the user experience of navigating and displaying programming content. The techniques may be particularly useful for high resolution viewing screens. With advances in high resolution displays the user's viewing experience has become of paramount importance because of the increased detail in which content may be viewed. In one example, the techniques described herein may enhance a user's experience of navigating and displaying programming content by providing a three dimensional user experience. In some examples, the techniques may be implemented in a device with digital media playback capabilities, including for example, laptop or desktop computers, tablet computers, smart phones, set top boxes, and televisions.

According to one example of the disclosure, a method for enabling content selection comprises displaying icons representing items of content in a helical structure and enabling a user to select an icon from the helical structure.

According to another example of the disclosure, a device for enabling content selection comprises one or more processors configured to display icons representing items of content in a helical structure and enable a user to select an icon from the helical structure.

According to another example of the disclosure, an apparatus for enabling content selection comprises means for displaying icons representing items of content in a helical structure and means for enabling a user to select an icon from the helical structure.

According to another example of the disclosure, a non-transitory computer-readable storage medium has instructions stored thereon that upon execution cause one or more processors of a device to display icons representing items of content in a helical structure and enable a user to select an icon from the helical structure.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is block diagram illustrating an example of a system that may implement one or more techniques of this disclosure.
FIG. 2A is a block diagram illustrating an example of a computing device that may implement one or more techniques of this disclosure.
FIG. 2B is a conceptual diagram illustrating an example of an input/output device that may implement one or more techniques of this disclosure.
FIG. 3A-3E are conceptual diagram illustrating an example of a helical structure that may be used to implement a graphical user interface in accordance with one or more techniques of this disclosure.
FIG. 4A-4B are conceptual diagrams illustrating examples of a graphical user interface in accordance with one or more techniques of this disclosure.
FIG. 5A-5D are conceptual diagrams illustrating an example of a graphical user interface in accordance with one or more techniques of this disclosure.
FIG. 6A-6B are conceptual diagrams illustrating an example of a graphical user interface in accordance with one or more techniques of this disclosure.

### DETAILED DESCRIPTION

Described herein are systems and methods for enabling the selection of content. Some embodiments extend to a machine-readable medium embodying instructions which, when executed by a machine, cause the machine to perform any one or more of the methodologies described herein. Other features will be apparent from the accompanying drawings and from the detailed description that follows. Examples merely typify possible variations. Unless explicitly stated otherwise, components and functions are optional and may be combined or subdivided, and operations may vary in sequence or may be combined or subdivided. In the following description, for purposes of explanation, numerous specific details are set forth to provide a thorough understanding of example embodiments. It will be evident to one skilled in the art, however, that the present subject matter may be practiced without these specific details.

Devices with digital media playback capabilities, including, for example, televisions, set top boxes, and mobile devices, may be configured to provide users thereof with graphical user interfaces that enable the selection of content. In some examples, these graphical user interfaces may be referred to as electronic program guides (EPGs). Traditional electronic programming guides are typically based on designs for relatively smaller and/or lower resolution displays than displays that are currently available or may be become available in the future. That is, traditional electronic program guides may have been designed when standard definition displays (576i resolutions) with a maximum size screen size of 32" were common. Whereas, current commercially available displays may be larger than 100" and may have resolutions as high as 3840 pixels by 2160 pixels. Further, even larger displays with higher resolutions are anticipated to be commercially available in the future. Displays with resolutions higher than standard or high definition displays may be referred to as ultra-resolution displays. Ultra-resolution displays, such as ultra-resolution televisions, increase the screen real-estate because more pixels can be seen by viewers allowing more content to be displayed efficiently. Further, smaller devices, such as tablet computers, may include high or ultra-resolution displays. Traditional electronic program guides may be less than ideal for use with ultra-resolution displays. The techniques described herein may enable a user to more efficiently select available content from a plurality of diverse sources.

Traditional electronic programming guides may include grid guides including textual listing of available content arranged by time slots and two-dimensional graphical user interfaces where icons representing items of available content are arranged in rows. FIG. 18 of United States Patent No. 7,834,849 illustrates an example of a graphical user interface where items of available content are arranged in rows. As illustrated in FIG. 18 of United States Patent No. 7,834,849, fifteen items of available content are included in the two-dimensional graphical user interface. Other traditional grid-style electronic programming guides may include a similar number of items. Given the large amount of available content, including content available from several diverse sources, traditional grid-style electronic programming guides may only present a user with a very small percentage of available content at a time. Further, a grid of icons may not have a clear way of organization. That is, it may be difficult for a user to determine if the content is organized from left to right and top to bottom or top to bottom and left to right.

Further, traditional grid-style electronic programming guides may typically only present new items of content upon a user navigating to the end of a row or scrolling down. Typically, new items of content replace items of content in a one-to-one manner. For example, when the user scrolls to the bottom of a graphical user interface, the top row of items of available content is replaced by a bottom row of items of available content, (e.g., five items of content are replaced with five items of content) thereby limiting the efficiency that a user content browse a content catalog.

As described in detail below, the systems and techniques described herein may enable more items of available content to be presented to a user and enable more efficient browsing of available content. In some examples, these features may then be transported on other devices beyond a television, creating a seamless interface that enhance the user experience. That is, for example, the graphical user interfaces described herein may be displayed on a secondary display (e.g., a smart phone display) in conjunction with being displayed on a primary display (e.g., an ultra-resolution television).

In one example, graphical user interfaces described herein present programming content, or any other data, in a three dimensional helix shape (e.g., a helical arrangement of icons). The three dimensional nature of a helix shape may allow a user to be presented with much more programming content at a time compared to a traditional two-dimensional grid layout. Further, organizing items in a three dimensional space may provide much more screen real estate for displaying many more items in a list. In one example, a user may browse items of available content by rotating a helical arrangement of items of available content about an axis. Such rotation may cause items of content to move with respect to X, Y, and Z-axes. Moving items of content with respect to X, Y, and Z-axes may allow users to browse programming content much more effectively than with a traditional two-dimensional X-axis and Y-axis grid. As further described below, a helix shape may also allow for fast and efficient skipping of items in an ordered list by enabling a user to jump between parallel rows. In one example, a helix shape may be navigated using a standard remote control device having navigational arrow buttons (e.g., UP/Down/Left/Right buttons) or thru other movements associated with various secondary connected devices.

Additionally, a helix shape may be superior to two-dimensional grids and one dimensional lists because it may combine the strengths of both the grid and the list into a single design without having the same weaknesses. A strength of a two-dimensional grid arrangement is that it allows data to be laid out in rows and columns which may make it easier to navigate through larger sets of data by jumping rows or columns. A one-dimensional list may preserve order, but content is navigated item-by-item and fewer items are displayed on the screen. As described below, a helical arrangement of icons may provide a combination of a one dimensional list that spirals around a directional axis that may list items always facing the user. The list may be navigated item by item or by rotation. For example, in a helix that travels along the Y-axis, left and right keys may navigate the list, item-by-item and up and down keys may navigate by one rotation around the apex. Preserving the aspect of the ordered list is important because this allows a user to easily navigate through content that may be ordered alphabetically, by a recommendation algorithm, by date, or other sorting mechanisms. Preserving multi-dimensional navigation is important because it allows users to navigate content quickly.

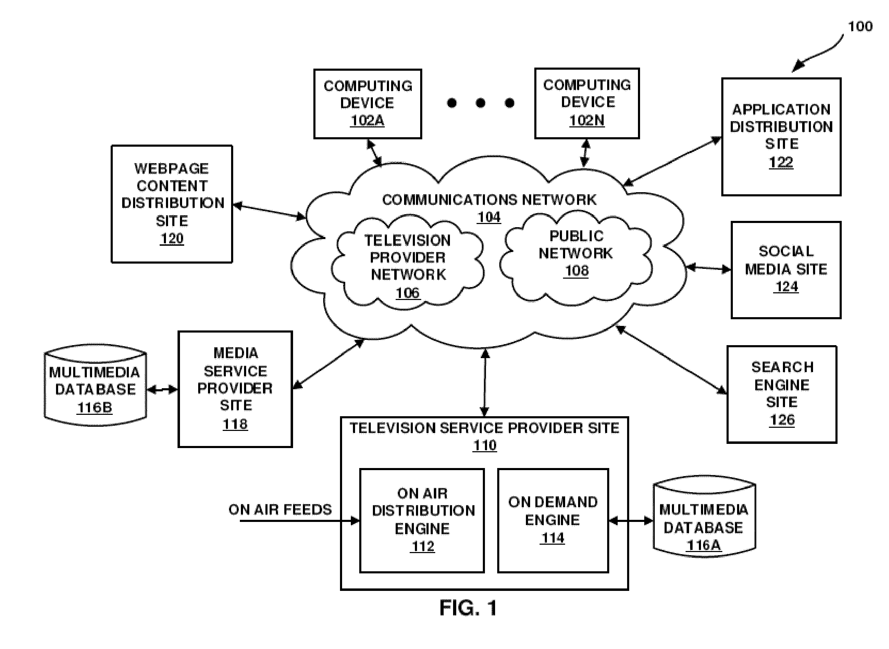

FIG. 1 is block diagram illustrating an example of a system that may implement one or more techniques described in this disclosure. System 100 may be configured to enable content selection in accordance with the techniques described herein. In the example illustrated in FIG. 1, system 100 includes one or more computing devices 102A-102N, communications network 104, television service provider site 110, media service provider site 118, webpage content distribution site 120, application distribution site 122, social media site 124, and search engine site 126. System 100 may include software modules operating on one or more servers. Software modules may be stored in a memory and executed a processor. Servers may include one or more processors and a plurality of internal and/or external memory devices. Examples of memory devices include file servers, FTP servers, network attached storage (NAS) devices, local disk drives, or any other type of device or storage medium capable of storing data. Storage media may include Blu-ray discs, DVDs, CD-ROMs, flash memory, or any other suitable digital storage media. When the techniques described herein are implemented partially in software, a device may store instructions for the software in a suitable, non-transitory computer-readable medium and execute the instructions in hardware using one or more processors.

System 100 represents an example of a system that may be configured to allow digital content, such as, for example, music, videos, images, webpages, messages, voice communications, and applications, to be distributed to and accessed by a plurality of computing devices, such as computing devices 102A-102N. In the example illustrated in FIG. 1, computing devices 102A-102N may include any device configured to transmit data to and/or receive data from communication network 104. For example, computing devices 102A-102N may be equipped for wired and/or wireless communications and may include set top boxes, digital video recorders, televisions, desktop, laptop, or tablet computers, gaming consoles, mobile devices, including, for example, "smart" phones, cellular telephones, and personal gaming devices. It should be noted that although example system 100 is illustrated as having distinct sites, such an illustration is for descriptive purposes and does not limit system 100 to a particular physical architecture. Functions of system 100 and sites included therein may be realized using any combination of hardware, firmware and/or software implementations.

Communications network 104 may comprise any combination of wireless and/or wired communication media. Communications network 104 may include coaxial cables, fiber optic cables, twisted pair cables, wireless transmitters and receivers, routers, switches, repeaters, base stations, or any other equipment that may be useful to facilitate communications between various devices and sites. Communications network 104 may operate according to a combination of one or more telecommunication protocols. Telecommunications protocols may include proprietary aspects and/or may include standardized telecommunication protocols. Examples of standardized telecommunications protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, Global System Mobile Communications (GSM) standards, code division multiple access (CDMA) standards, 3rd Generation Partnership Project (3GPP) standards, European Telecommunications Standards Institute (ETSI) standards, Internet Protocol (IP) standards, Wireless Application Protocol (WAP) standards, and IEEE standards, such as, for example, one or more of standards included in the IEEE 802 family of standards.

As illustrated in FIG. 1, networks of different types may be defined within communications network 104. Networks may be defined according to physical and/or logical aspects. For example, networks that share the same physical infrastructure (e.g., coaxial cables) may be distinguished based on a primary service type (e.g., webpage access or television service). Physical and logical aspects of networks may be described according to a layered model. For example, layers of a model may respectively define physical signaling, addressing, channel access control, packet properties, and data processing in a communications system. One example of a layered model is the Open Systems Interconnection (OSI) model. In the example illustrated in FIG. 1, communications network 104 includes television provider network 106 and public network 108. It should be noted that although television provider network 106 and public network 108 are illustrated as distinct, television provider network 106 and public network 108 may share physical and/or logical aspects.

Television provider network 106 is an example of a network configured to provide a user with television services. For example, television provider network 106 may include public over-the-air television networks, public or subscription-based satellite television service provider networks, and public or subscription-based cable television provider networks. It should be noted that although in some examples television provider network 106 may primarily be used to provide television services, television provider network 106 may also provide other types of data and services according to any combination of the telecommunication protocols described herein.

Public network 108 is an example of a packet-based network, such as, a local area network, a wide-area network, or a global network, such as the Internet, configured to provide a user with World Wide Web based services. Public network 108 may be configured to operate according to Internet Protocol (IP) standards. It should be noted that although in some examples public network 108 may primarily be used to provide access to hypertext web pages, public network 108 may also provide other types of media content according to any combination of the telecommunication protocol described herein.

Referring again to FIG. 1, television service provider 110 represents an example of a television service provider site. Television service provider 110 may be configured to provide computing devices 102A-102N with television service. For example, television service provider 110 may be a public broadcast station, a cable television provider, or a satellite television provider and may be configured to provide television services to analog and/or digital televisions and set top boxes. In the example illustrated in FIG. 1, television service provider 110 includes on air distribution engine 112 and on demand engine 114. On air distribution engine 112 may be configured to receive a plurality of on air feeds and distribute the feeds to computing devices 102A-102N through television provider network 106. For example, on air distribution engine 112 may be configured to receive one or more over-the-air television broadcasts via a satellite uplink/downlink and distribute the over-the-air television broadcasts to one or more users of a subscription-based cable television service.

On demand engine 114 may be configured to access a multimedia library and distribute multimedia content to one or more of computing devices 102A-102N through television provider network 106. For example, on demand engine 114 may access multimedia content (e.g., music, movies, and TV shows) stored in multimedia database 116A and provide a subscriber of a cable television service with movies on a Pay Per View (PPV) basis. Multimedia database 116A may be a storage device configured to store multimedia content. It should be noted that multimedia content accessed through on demand engine 114 may also be located at various sites within system 100 (e.g., peer-to-peer distribution).

Media service provider site 118 represents an example of a multimedia service provider. Media service provider site 118 may be configured to access a multimedia library and distribute multimedia content to one or more of computing devices 102A-102N through public network 108. For example, media service provider site 118 may access multimedia (e.g., music, movies, and TV shows) stored in multimedia database 116B and provide a user of a media service with multimedia. Multimedia database 116B may be a storage device configured to store multimedia content. In one example, media service provider site 118 may be configured to provide content to one or more of computing devices 102A-102N using the Internet protocol suite. In some examples, a media service may be referred to as a streaming service. Commercial examples of media services may include Hulu, YouTube, Netflix, Amazon Prime and network based streaming services (e.g. WatchESPN). As described above, television provider network 106 and public network 108 may share physical and logical aspects. Thus, content accessed by one or more of computing devices 102A-102N through media service provider site 118 may be transmitted through physical components of television provider network 106. For example, a user of a computing device may access the internet and multimedia content provided by a media service through a cable modem connected to a coaxial network maintained by a cable television provider.

Webpage content distribution site 120 represents an example of a webpage service provider. Webpage content distribution site 120 may be configured to provide hypertext based content to one or more of computing devices 102A-102N through public network 108. It should be noted that hypertext based content may include audio and video content. Hypertext content may be defined according to programming languages, such as, for example, Hypertext Markup Language (HTML), Dynamic HTML, and Extensible Markup Language (XML). Examples of webpage content distribution sites include the Wikipedia website and the United States Patent and Trademark Office website.

Application distribution site 122 represents an example of an application distribution service. Application distribution site 122 may be configured to distribute developed software applications to one or more of computing devices 102A-102N. In one example, software applications may include games and programs operable on computing devices. In other examples, software applications may be configured to allow a computing device to access content provided by a site in manner specific to the computing device. For example, software applications may be configured to provide enhanced or reduced functionality of a webpage to a mobile device or a set top box. Software applications may be developed using a specified programming language. Examples of programming languages include, Java^{™}, Jini^{™}, C, C++, Perl, UNIX Shell, Visual Basic, and Visual Basic Script. In some examples, developers may write software applications using a software development kit (SDK) provided by a device manufacturer or a service provider. In the example where one or more of computing devices 102A-102N are mobile devices, application distribution site 122 may be maintained by a mobile device manufacturer, a service provider, and/or a mobile device operating system provider. In the example where one or more of computing devices 102A-102N are set top boxes, application distribution site 108 may be maintained by a set top box manufacturer, a service provider, and/or an operating system provider. In some examples, an application distribution site may be referred to as an app store. Examples of commercially available application distribution sites include Google Play, the Apple App Store, BlackBerry World, Windows Phone Store, and the Amazon Appstore.

Social media site 124 represents an example of a social media service. Social media site 124 may be configured to allow users of computing devices 102A-102N to communicate with one another. Social media site 124 may be configured to host profile pages corresponding to users of computing devices 102A-102N. For example, social media site 124 may be configured such that users of computing devices 102A-102N are able to display messages and upload photos, videos, and other media to a user's profile page. Examples of commercially available social media sites include Facebook, YouTube, Linkedin, Google Plus, Twitter, Flickr, and Instagram. In addition to allowing users to maintain profile pages, social media site 124 may be configured to generate analytical data based on information included in user profile pages and/or user activity. For example, social media site 124 may be configured to track the popularity of a news story based on comments provided by users of computing devices 102A-102N.

Search engine site 126 represents an example of a content search service. Search engine site 126 may be a service configured to allow users of computing devices 102A-102N to search for content available through communications network 104. Search engine site 126 may be configured to receive queries from computing devices 102A-102N and provide a list of search results to computing devices 102A-102N. For example, search engine site 126 may be configured such that users of computing devices 102A-102N are presented with a webpage including a search query field and are able to search content based on keywords. Examples of commercially available search engine sites include Google, Bing, and Yahoo! Further, search engine site 126 may be configured to generate analytical data based on information included in search queries. For example, search engine site 126 may be configured to track the popularity of an actress based on the number of times a query related to the actress is provided by users of computing devices 102A-102N.

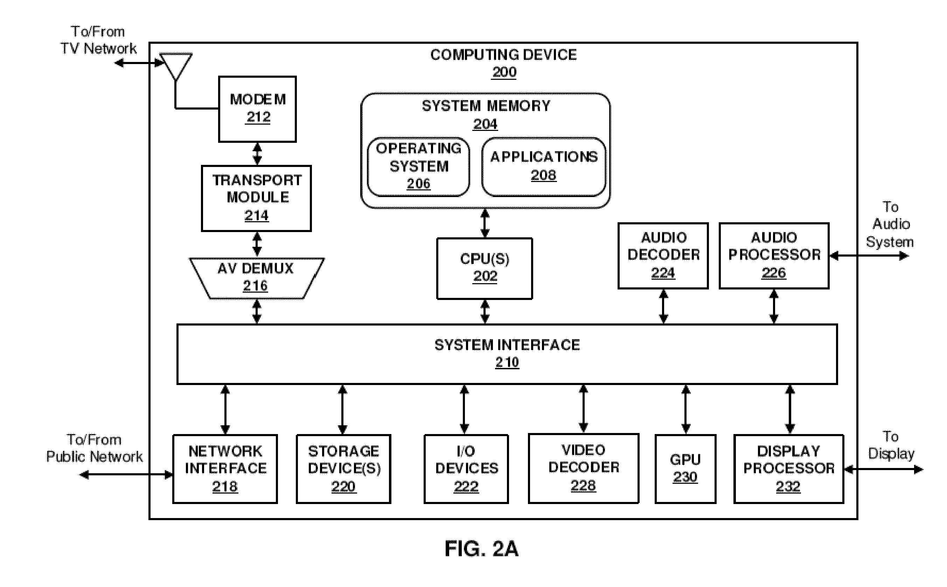

FIG. 2A is a block diagram illustrating an example of a computing device that may implement one or more techniques of this disclosure. Computing device 200 is an example of a computing device that may be configured to transmit data to and receive data from a communications network, allow a user to access multimedia content, and execute one or more applications. Computing device 200 may include or be part of a stationary computing device (e.g., a desktop computer, a television, a set-top box, a gaming console, a dedicated multimedia streaming device, or a digital video recorder), a portable computing device (e.g., a mobile phone, a laptop, a personal data assistant (PDA), or a tablet device) or another type of computing device. In the example illustrated in FIG. 2A, computing device 200 is configured to send and receive data via a television network, such as, for example, television network 106 described above and send and receive data via a public network, such as, for example, public network 108. It should be noted that in other examples, computing device 200 may be configured to send and receive data through one of a television network 106 or a public network 108. The techniques described herein may be utilized by devices configured to communicate using any and all combinations of communications networks.

As illustrated in FIG. 2A, computing device 200 includes central processing unit(s) 202, system memory 204, system interface 210, modem 212, transport module 214, AV demux 216, network interface 218, storage devices 220, I/O devices 222, audio decoder 224, audio processor 226, video decoder 228, graphics processing unit 230, and display processor 232. As illustrated in FIG. 2A, system memory 204 includes operating system 206 and applications 208. Each of processor(s) 202, system memory 204, system interface 210, modem 212, transport module 214, AV demux 216, network interface 218, storage devices 220, I/O devices 222, audio decoder 224, audio processor 226, video decoder 228, graphics processing unit 230, and display processor 232 may be interconnected (physically, communicatively, and/or operatively) for inter-component communications and may be implemented as any of a variety of suitable circuitry, such as one or more microprocessors, digital signal processors (DSPs), application specific integrated circuits (ASICs), field programmable gate arrays (FPGAs), discrete logic, software, hardware, firmware or any combinations thereof. It should be noted that although example computing device 200 is illustrated as having distinct functional blocks, such an illustration is for descriptive purposes and does not limit computing device 200 to a particular hardware architecture. Functions of computing device 200 may be realized using any combination of hardware, firmware and/or software implementations.

CPU(s) 202 may be configured to implement functionality and/or process instructions for execution in computing device 200. CPU(s) 202 may be capable of retrieving and processing instructions, code, and/or data structures for implementing one or more of the techniques described herein. Instructions may be stored on a computer readable medium, such as system memory 204 or storage devices 220. CPU(s) 202 may include multi-core central processing units.

System memory 204 may be described as a non-transitory or tangible computer-readable storage medium. In some examples, system memory 204 may provide temporary and/or long-term storage. In some examples, system memory 204 or portions thereof may be described as non-volatile memory and in other examples portions of system memory 204 may be described as volatile memory. Examples of volatile memories include random access memories (RAM), dynamic random access memories (DRAM), and static random access memories (SRAM). Examples of non-volatile memories include magnetic hard discs, optical discs, floppy discs, flash memories, or forms of electrically programmable memories (EPROM) or electrically erasable and programmable (EEPROM) memories.

System memory 204, may be configured to store information that may be used by computing device 200 during operation. System memory 204 may be used to store program instructions for execution by CPU(s) 202 and may be used by software or applications running on computing device 200 to temporarily store information during program execution. For example, system memory 204 may store instructions associated with operating system 206 and applications 208. Applications 208 may include applications implemented within or executed by computing device 200 and may be implemented or contained within, operable by, executed by, and/or be operatively/communicatively coupled to components of computing device 200. Applications 208 may include instructions that may cause CPU(s) 202 of computing device 200 to perform particular functions. Applications 208 may include algorithms which are expressed in computer programming statements, such as, for-loops, while-loops, if-statements, do-loops, etc. Applications 208 may be distributed to computing device 200 through an application distribution site, such as, for example, application distribution site 122 described above.

As further illustrated in FIG. 2A, applications 208 may execute in conjunction with operating system 206. That is, operating system 206 may be configured to facilitate the interaction of applications 208 with CPUs(s) 202, and other hardware components of computing device 200. It should be noted that in some examples, components of operating system 206 and components acting in conjunction with operating system 206 may be referred to as middleware. The techniques described herein may be utilized by devices configured to operate using any and all combinations of software architectures. Operating system 206 may be an operating system designed to be installed on laptops, desktops, smartphones, tablets, set-top boxes, digital video recorders, televisions and/or gaming devices. In one example, operating system 206 may include one or more of operating systems or middleware components developed by OpenTV, Windows operating systems, Linux operation systems, Mac operating systems, Android operating systems, and any and all combinations thereof.

System interface 210 may be configured to enable communications between components of computing device 200. In one example, system interface 210 comprises structures that enable data to be transferred from one peer device to another peer device or to a storage medium. For example, system interface 210 may include a chipset supporting Accelerated Graphics Port ("AGP") based protocols, Peripheral Component Interconnect (PCI) bus based protocols, such as, for example, the PCI Express^{™} ("PCIe") bus specification, which is maintained by the Peripheral Component Interconnect Special Interest Group, or any other form of structure that may be used to interconnect peer devices.

Storage devices 220 represent memory of computing device 200 that may be configured to store relatively larger amounts of information for relatively longer periods of time than system memory 204. For example, in the example where computing device 200 is included as part of a digital video recorder, storage devices 220 may be configured to store numerous video files. Similar to system memory 204, storage device(s) 220 may also include one or more non-transitory or tangible computer-readable storage media. Storage device(s) 220 may include internal and/or external memory devices and in some examples may include volatile and non-volatile storage elements.

I/O devices 222 may be configured to receive input and provide output during operation of computing device 200. Input may be generated from an input device, such as, for example, a push-button remote control, a motion based remote control, a device including a touch-sensitive screen, a device including a track pad, a mouse, a keyboard, a microphone, a video camera, a motion sensor, or any other type of device configured to receive user input. In one example, an input device may include an advanced user input device, such as a smart phone or a tablet computing device. For example, an input device may be a secondary computing device and may be configured to receive user input via touch gestures, buttons on the secondary computing device, and/or voice control. Further, in some examples, an input device may include a display that is configured to display the graphical users interfaces described herein. For example, in the case where computing device 200 includes a television, an input device may include a smart phone in communication with the television. In this example, a user may provide commands to a television by activating portions of a graphical user interface displayed on a smart phone. The graphical user interface displayed on the smart phone may be a replica or an extension of a graphical user interface displayed on the television. Output may be provided to output devices, such as, for example internal speakers, an integrated display device, and/or external components, such as, a secondary computing device. In some examples, I/O device(s) 222 may be operatively coupled to computing device 200 using a standardized communication protocol, such as for example, Universal Serial Bus protocol (USB), Bluetooth, ZigBee or a proprietary communications protocol, such as, for example, a proprietary infrared communications protocol.

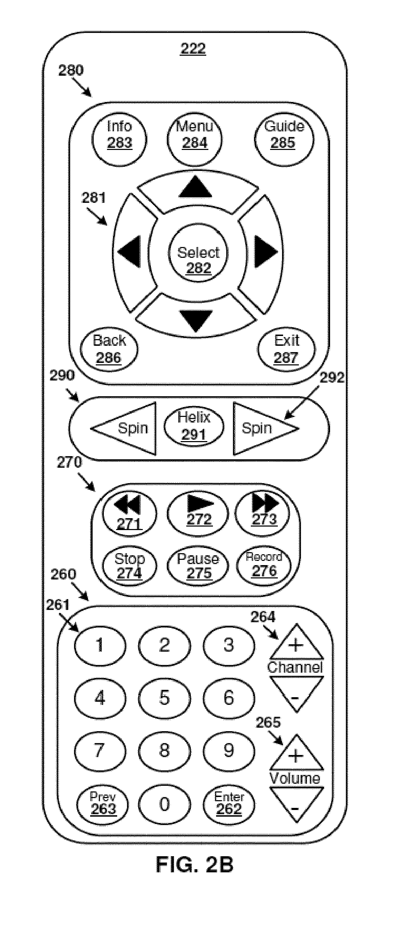

FIG. 2B is a conceptual diagram illustrating an example of an input/output device that may implement one or more techniques of this disclosure. In the example illustrated in FIG. 2B, I/O device 222 is illustrated as a push-button remote control. It should be noted that while I/O device 222 is illustrated as a push-button remote control in the example illustrated in FIG. 2B, in other examples, the functionality of I/O device 222 may be implemented using other types of I/O devices, such as, for example, a secondary computing device in communication with a primary computing device. Further, in other examples, functions achieved by activation of buttons of I/O device 222 may be achieved through other types of user inputs. For example, in the case where an I/O device includes a touchscreen, gesture recognition, and/or voice recognition, virtual buttons may be presented on the touchscreen and functions achieved by activation of buttons on I/O device 222 may be achieved through any and all combinations of virtual button activation, motion gestures, and/or voice commands. In one example, an I/O device may have voice recognition capabilities and a function achieved by activation of helix button 291 may be achieved by a user saying "helix," "display helix," or a similar phrase.

In the example illustrated in FIG. 2B, I/O device 222 includes basic television controls 260, playback controls 270, navigational controls 280, and helix structure controls 290. Basic television controls 260 may be configured to enable a user to perform basic tuning and volume control functions associated with viewing television programming. As illustrated in FIG. 2B, basic television controls 260 include numeric keypad 261, enter button 262, previous channel button 263, channel change buttons 264, and volume control buttons 265. Numeric keypad 261, enter button 262, previous channel button 263, and channel change buttons 264 may be configured to enable a user to tune to a particular analog and/or digital channel. Upon a user entering a sequence of numbers using numeric keypad 261 and, optionally, additionally activating enter key 262, a tuner may tune to a specified channel. Upon activation of previous channel button 263, a tuner may tune to a previously tuned channel. Activation of "+" and "-" channel buttons 264 may respectively cause a tuner to tune to the respective next channel in a sequence of channels. Activation of "+" and "-" volume control buttons 265 may respectively cause the output of an audio system to be increased or decreased. It should be noted that although the basic television controls 260 may be configured to enable a user to perform basic tuning and volume control functions associated with a television, in some examples, basic television controls 260 may be used to perform other functions associated with a computing device. In one example, activation of "+" and "-" channel buttons 264 may cause the vertical position of a helical structure of icons within a viewing area to change, as described in detail below.

Playback controls 270 may be configured to enable a user to control the playback of and/or record multimedia content. For example, playback controls 270 may enable a user to control the playback of a video originating from a media service provider site, an on demand engine, and/or a personal video recorder (PVR). As illustrated in FIG. 2B, playback controls 270 include reverse playback button 271, normal playback button 272, forward playback button 273, stop playback button 274, pause playback button 275, and record button 276. Reverse playback button 271 may enable to a user to navigate to a previous point in a multimedia sequence. Upon activation, normal playback button 272 may cause normal playback of an item of multimedia content to begin or resume. Forward playback button 273 may enable a user to navigate to a future point in a multimedia sequence. Upon activation, stop playback button 274 may cause the playback of an item of multimedia content to cease. Upon activation, pause playback button 275 may cause the playback of an item of multimedia content to be paused. Record button 276 may enable a user to cause an item of multimedia content to be stored to a storage device. In one example, record button 276 may enable a user to record content to a storage device. It should be noted that although playback controls 270 may be configured to enable a user to control the playback of and/or record multimedia content, in some examples playback controls 270 may be used to perform other functions associated with a computing device. In one example, activation of reverse playback button 271 and forward playback button 273 may cause helical structure of icons to rotate, as described in detail below.

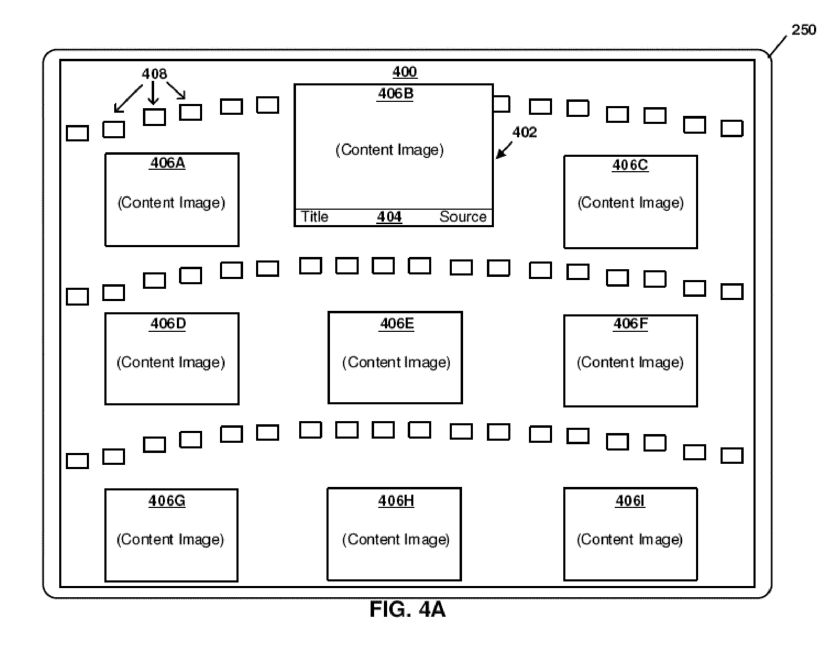

As described above, devices with digital media playback capabilities, including, for example, televisions, set top boxes, and mobile devices, may be configured to provide users thereof with graphical user interfaces that enable the selection of content. Navigational controls 280 may be configured to enable a user to navigate graphical user interfaces and select content using a graphical user interface. In one example, navigational controls 280 may be configured to enable a user to navigate graphical user interfaces and select content using one of more of the example graphical user interfaces described below with respect to FIGS. 4A-6B.

In the example illustrated in FIG. 2B, navigational controls 280 include navigational arrow buttons 281, select button 282, information button 283, menu button 284, guide button 285, back button 286, and exit button 287. Navigational arrow buttons 281 may be configured to move the position of a cursor associated with a graphical user interface and/or change the selection of an item included in a graphical user interface. For example, navigational arrow buttons 281 may enable the user to change the selection of an icon in helical structure of icons as described in detail below.

Select button 282 may enable a user to further select an item of content. As described in detail below, an icon representing an item of content may be associated with multiple levels of selection. In one example, consecutive activations of select button 282 may cause respective levels of selection to occur. Information button 283 may be configured to cause additional information associated with an item of content of to be displayed. For example, when an icon representing an item of content is initially selected, activation of information button 283 may cause information associated with the content (e.g., cast and crew information) to be displayed.

Menu button 284, guide button 285, back button 286, and exit button 287 may be configured to enable a user to cause different graphical user interfaces to be presented. Upon activation, menu button 284 may cause a graphical user interface including a high level menu to be displayed. In one example, a high level menu may include a menu that enables a user to change settings associated with the operation of a computing device. In one example, a high-level menu may include a menu that enables a user to select a user profile (e.g., a log-in graphical user interface). Upon activation, guide button 285 may be configured to provide a graphical user interface that enables a user to select content. In one example, upon activation of guide button 285, graphical user interface 400 described with respect to FIGS. 4A-4B below may be presented to a user. In another example, upon activation of guide button 285, a graphical user interface including a grid guide may be presented to a user.

Back button 286 may be configured to enable a user to return to a previous graphical user interface. Exit button 287 may be configured to enable a user to return to a full screen viewing mode. For example, when a graphical user interface is displayed, upon activation of exit button 287, the graphical user interface may "disappear" and full screen content viewing mode may be presented to a user. As described in detail below with respect to FIGS. 4A-6B, icons representing items of content may be organized and presented to a user using a helical structure. Helical structure controls 290 may be configured to enable a user to navigate and/or sort helical structures. As illustrated in FIG. 2B, helical structure controls 290 include helix button 291 and spin navigational buttons 292. Helix button 291 and spin navigational buttons 292 are described in detail below.

Referring again to FIG. 2A, computing device 200 is configured to send and receive data via a television network, such as, for example, television network 106 described above and send and receive data via a public network, such as, for example, public network 108. As described above, a communications network may be described based on a model including layers that define communication properties, such as, for example, physical signaling, addressing, channel access control, packet properties, and data processing in a communications system. In the example illustrated in FIG. 2A, modem 212, transport module 214, and AV demux 216 may be configured to perform lower layer processing associated with television network 106 and network interface 218 may be configured to perform lower layer processing associated with public network 108.

In one example, modem 212 may be configured to perform physical signaling, addressing, and channel access control according to the physical and MAC layers utilized in a television provider network, such as, for example, television provider network 106. In one example, modem 212 may configured to receive signals from a coaxial cable and/or an over-the-air signal and perform low level signal processing (e.g., demodulation). In one example, modem 212 may be configured to extract transport streams from signals received from a coaxial cable. In one example, a transport stream may be based on a transport stream defined by the Moving Pictures Experts Group (MPEG). In one example, a transport stream may include a plurality of program streams where each program stream respectively corresponds to a program available from a television network. Further, a transport stream may include a plurality of data streams (e.g., Program Map Table and EPG data).

Transport module 214 may be configured to receive data from modem 212 and process received data. For example, transport model 214 may be configured to receive a transport stream including a plurality of program streams and extract individual program streams from a received transport stream. In one example, a program stream may include a video stream, an audio stream, and a data stream. AV demux 216 may be configured to receive data from transport module 214 and process received data. For example, AV demux 216 may be configured to receive a program stream from transport module 214 and extract audio packets, video packets, and data packets. That is, AV demux 216 may apply demultiplexing techniques to separate video streams, audio streams, and data streams from a program stream. In one example, AV demux 216 may be configured to decapsulate packetized elementary video and audio streams from a transport stream defined according to MPEG-2 Part 1. It should be noted that although modem 212, transport module 214, and AV demux 216 are illustrated as distinct functional blocks, the functions performed by modem 212, transport module 214, and AV demux 216 may be highly integrated and realized using any combination of hardware, firmware and/or software implementations.

Network interface 218 may be configured to enable computing device 200 to send and receive data via a public network. As described above, data sent or received via a public network may include data associated digital content, such as, for example, music, videos, images, webpages, messages, voice communications, and applications. Network interface 218 may include a network interface card, such as an Ethernet card, an optical transceiver, a radio frequency transceiver, or any other type of device configured to send and receive information. Network interface 218 may be configured to perform physical signaling, addressing, and channel access control according to the physical and MAC layers utilized in a public network, such as, for example, public network 108. Further, in a manner similar to that described above with respect to transport module 214 and A/V demux 216, network interface 218 may be configured to extract audio packets, video packets, and data packets from a data stream. For example, network interface 218 may be configured to extract video packets, audio packets, and data packets according to one or more of internet protocol (IP), transport control protocol (TCP), real time streaming protocol (RTSP), user datagram protocol (UDP), real time protocol (RTP), MPEG transport stream protocols, and IPTV protocols. It should be noted, that the techniques described herein are generally applicable to any and all methods of digital content distribution and are not limited to particular communications network implementations. For example, the techniques described herein may be applicable to digital content originating from one or more of a broadcast, a multicast, a unicast, an over-the-top content source, a personal video recorder (PVR), and a peer-to-peer content source.

Referring again to FIG. 2A, data associated with digital content, such as, for example, music, videos, images, webpages, messages, voice communications, and applications may be stored in a computer readable medium, such as, for example, system memory 204 and storage devices 220. Data stored in a memory device may be retrieved and processed by CPU(s) 202, audio decoder 224, audio processor 226, video decoder 228, graphics processing unit 230, and display processor 232. As described above, CPU(s) 202 may be capable of retrieving and processing instructions, code, and/or data structures for implementing one or more of the techniques described herein. Each of audio decoder 224, audio processor 226, video decoder 228, graphics processing unit 230, and display processor 232 may also be capable of retrieving and processing instructions, code, and/or data structures for implementing one or more of the techniques described herein.

Audio decoder 224 may be configured to retrieve and process coded audio data. For example, audio decoder 224 may be a combination of hardware and software used to implement aspects of audio codec. Audio data may be coded using multi-channel formats such as those developed by Dolby and Digital Theater Systems. Audio data may be coded using a compressed or uncompressed format. Examples of compressed audio formats include MPEG-1, 2 Audio Layers II and III, AC-3, AAC, and Ogg Vorbis. An example of an uncompressed audio format includes pulse-code modulation (PCM) audio format. Audio processor 226 may be configured to retrieve captured audio samples and may process audio data for output to an audio system (not shown). In some examples, audio processor 226 may include a digital to analog converter. An audio system may comprise any of a variety of audio output devices such as headphones, a single-speaker system, a multi-speaker system, or a surround sound system.

Video decoder 228 may be configured to retrieve and process coded video data. For example, video decoder 228 may be a combination of hardware and software used to implement aspects of video codec. In one example, video decoder 228 may be configured to decode video data encoded according to any number of video compression standards, such as ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 (also known as ISO/IEC MPEG-4 AVC), VP8, and High-Efficiency Video Coding (HEVC).

As described above, a device with media playback capabilities may provide a graphical user interface (e.g., an EPG) that enables a user to select content. A graphical user interface may include images and graphics displayed in conjunction with video content (e.g., playback icons overlaid on a video). Graphics processing unit 230 is an example of a dedicated processing unit that may be configured to generate graphical user interfaces, including the graphical user interfaces described herein. That is, graphics processing unit 230 may be configured to receive commands and content data and output pixel data. Graphic processing unit 230 may operate according to a graphics pipeline process (e.g., input assembler, vertex shader, geometry shader, rasterizer, pixel shader, and output merger). Graphics processing unit 230 may include multiple processing cores and may be configured to operate according to OpenGL (Open Graphic Library, managed by the Khronos Group) and/or Direct3D (managed by Microsoft, Inc.).

Display processor 232 may be configured to retrieve and process pixel data for display. For example, display processor 232 may receive pixel data from video decoder 228 and/or graphics processing unit 230 and output data for display. Display processor 232 may be coupled to a display, such as display 250 (not shown in FIG. 1) using a standardized communication protocol (e.g., HDMI, DVI, DisplayPort, component video, composite video, and/or VGA). Display 250 may comprise one of a variety of display devices such as a liquid crystal display (LCD), a plasma display, an organic light emitting diode (OLED) display, or another type of display device capable of presenting video data to a user. Display 250 may include a standard definition television, a high definition television, or an ultra-resolution display as described above. Further, display 250 may include an integrated display of a portable computing device (e.g., a mobile phone, a laptop, a personal data assistant (PDA), or a tablet device). As described above, in some examples a portable computing device may operate as an I/O device for a stationary computing device.

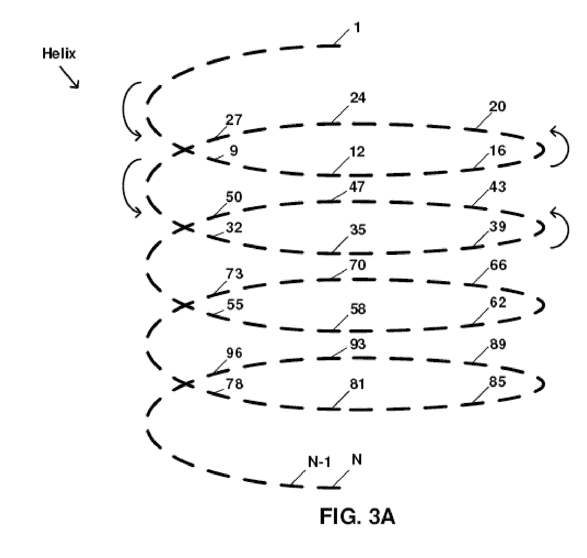

As described above, traditional electronic program guides (EPGs) may be less than ideal for displaying available content. For example, traditional EPGs may be limited in how many items of content are presented to a user and how efficiently a user can browse content (e.g., how many new items of content are presented to a user upon a user activating a command). Computing device 200 may be configured to enable the selection of content by providing one or more of the graphical user interfaces described herein. The graphical user interfaces described herein may be displayed using a computing device and/or an I/O device in communication with a computing device. As described above, techniques described herein may present programming content, or any other data, in a three dimensional helix shape (e.g., a helical arrangement of icons). As illustrated below, more content may be displayed to a user at one time using a helical arrangement of icons than in a two-dimensional grid because items in the helix shape are spread across the x, y, and z planes. FIGS. 3A-3E are conceptual diagrams illustrating an example of a helical structure that may be used to implement a graphical user interface in accordance with one or more techniques of this disclosure. FIGS. 4A-6B are conceptual diagrams illustrating examples of graphical user interfaces that may be generated by a computing device in accordance with one or more techniques of this disclosure.

Each of FIGS. 3A-3E illustrate a helix shape, wherein the helix shape comprises segments one through N. The helix shape illustrated in FIGS. 3A-3E may be used for displaying items in a list and may enable a user to browse ordered lists of items, including files on a computer operating system. Referring to FIG. 3A, each of the segments, one through N, may be associated with one or more items of content, where an item of content may include digital content including, for example, a television show available for viewing, a movie available for viewing, a musical album available for listening, user media (e.g., digital photos), and/or an application. Items of content may be available through a television provider and/or a media service provider and/or may be stored locally on a computing device. Items included in a helix may be homogenous or non-homogenous. For example, a helix may include a list of television shows organized by air times or it may include a list of recommended content that includes television shows, video on demand (VOD) content, music videos, web media, personal photos, or any media content deemed interesting to a user by a recommendation algorithm.

Items of content included in a helix may be ordered in a manner that facilitates browsing (e.g., by air time, genre, popularity, alphabetically, etc.). For example, a helix may include a collection of digital photographs and segments of the helix may be ordered based on a time when an image was captured. Further, in some examples, segments may be ordered based on categories. For example, when a helix includes a catalog of movies available on an on demand basis, segments 1-25 may correspond to movies associated with a drama genre, segments 26-50 may correspond to movies associated with a comedy genre, segments 51-75 may correspond to movies associated with an action genre, and segments 76-N may correspond to movies associated with a crime genre. In one example, segments may be ordered based on social recommendations from different friends, e.g., recommended television shows based on popularity data received from a social media site 124 and/or search engine site 126. It should be noted that graphical user interfaces based on a helical arrangement may be applied to any ordered list of items and are not limited to programming content for televisions. As described in detail below, users may navigate one item or rotation with a single button press, or they may hold down the button for a fast-navigation experience. Further, upon reaching the end or beginning of the list, a user may instantly be transported to the opposite end of the helix, preventing the user from having to navigate the list in reverse order.

It should be noted that although in the examples described herein illustrate a helical arrangement of icons oriented about a vertical axis, a helix may travel along any vector (e.g., horizontal, 45 degree angle, etc.) which allows for new layouts of the same content, giving the content a new look and feel without changing basic functionality. Because of the helix formation of the content list and the given perspective of displaying the helix from the side, a user may view much more data than traditional grids. Items may also be displayed in the periphery as well as along the Z-axis. In one example, the helix shape allows for selected items in the helix to be centered vertically and horizontally on the screen. Further, the distance from the apex of a helix may be defined by an exponential function giving the helix a conical look, e.g., like a tornado or bulbous like a turnip, again, furthering the ability to create new looking designs without changing functionality. In one example, multiple helixes could be entwined to allow users to navigate two lists at the same time, for example, by easily jumping between different ordered lists of content. For example, a graphical user interface may include an inner-helix and an outer-helix. In one example, one helix could include television programming and a second helix could include video on demand content. In another example, a user may view one helix shape with an ordered list of social recommendations simultaneously with an ordered list of user selected favorites.

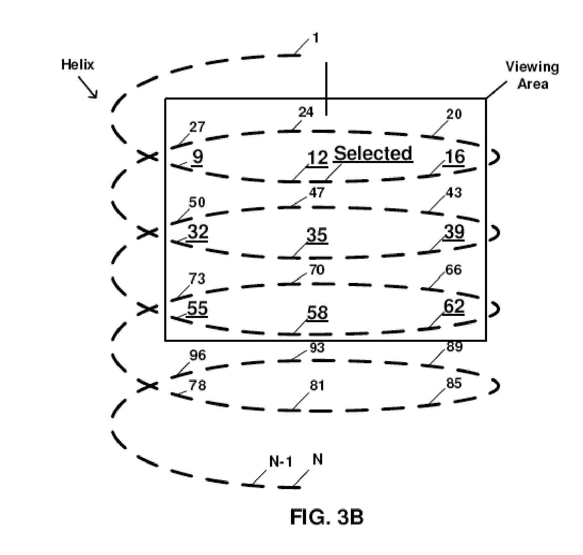

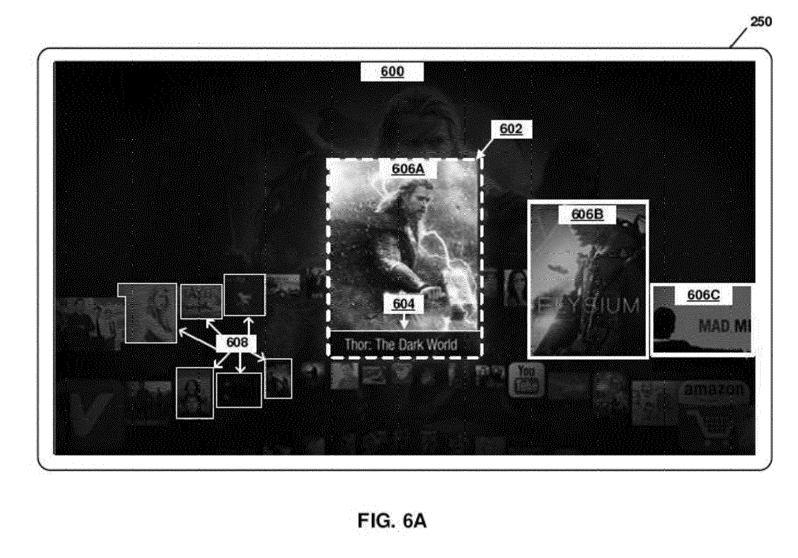

Referring to FIG. 3B, when generating a graphical user interface based on a helical structure, each of the segments of a helix may be represented by an icon. For example, each segment may include an image representing content (e.g., a movie poster or a logo). As illustrated in FIG. 3B, a subset of segments included in a helix may be located within a viewing area. The viewing area and the size and number of icons may be based on the properties of a display (e.g., size and resolution). For example, a viewing area may correspond to a 100" ultra-resolution display or a 50" High Definition display and the size and number of icons included in a viewing area may vary accordingly. Because a helix is a three-dimensional shape, segments in a helix may be in a foreground or a background of a viewing area. That is, a plane may vertically traverse a helix and divide the helix into a foreground region and a background region (i.e., in a manner similar to slicing a cylinder about its height). In one example, a graphical user interface may present icons to a user based a half a helical structure, as described below with respect to FIGS. 6A-6B. In this example, a user may be able navigate a helix by changing a viewing perspective. That is, a user may be able to "move a camera" to different positions (e.g., move from outside a helix to inside a helix) and view corresponding icons within a viewing perspective.

As described below, the placement of particular items within a viewing area may change as a user browses items of content. In the example illustrated in FIG. 3B segments 9-17, 19-27, 32-40, 42-50, 55-63, and 65-73 are included in viewing area, where segments 9-17, 32-40, and 55-62 are included in the foreground of the viewing area (foreground segments are underlined in FIGS. 3B-3E) and segments 19-27, 42-50, and 65-73 are included in the background of the viewing area. As illustrated in FIGS. 4A-5D, icons included in a foreground may appear larger than icons included in the background. As described below, a user may change which item in the foreground is selected. A user changing which item in the foreground is selected may cause items to change position in the viewing area, cause items to enter the viewing area, and cause items to exit the viewing area.

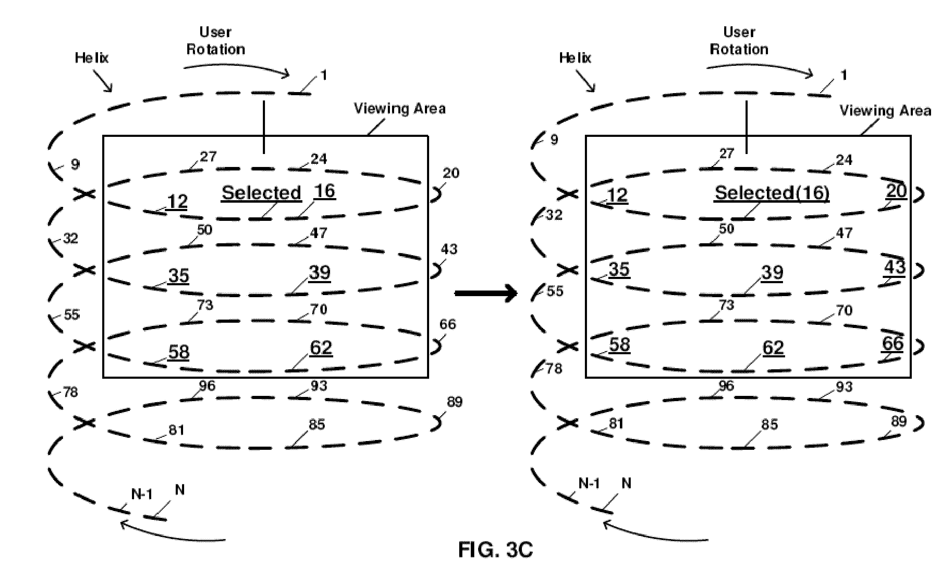

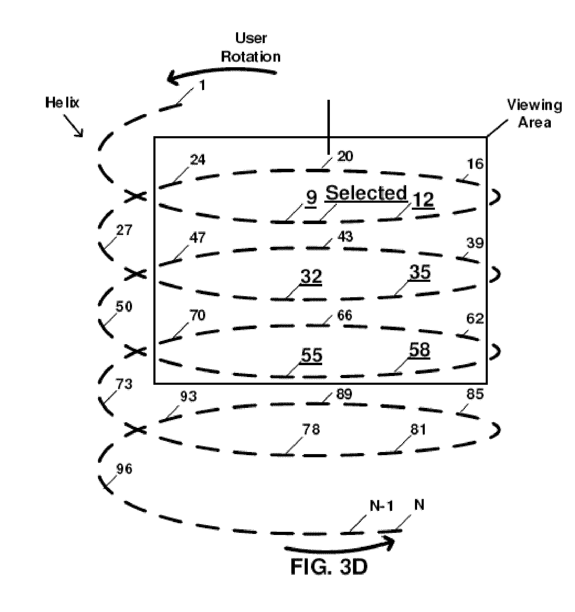

As illustrated in FIG. 3B, a segment in the top row of the foreground may be a selected segment (i.e., segment 13). As described above with respect to FIG. 2B, in one example, navigational arrow buttons 281 may enable the user to change the selection of an icon in helical structure. For example, activations of left arrow button may cause segments with a lower index position to become selected and activations of right arrow buttons may cause segments with a higher index position to be selected. FIG. 3C illustrates an example where a user causes a segment with a higher index position to become selected. FIG. 3D illustrates an example where a user causes a segment with a lower index position to become selected.

Referring to FIG. 3C, the left portion of FIG. 3C illustrates the position of the helix in FIG. 3B after the user activates the right arrow button two times (or holds down the right arrow button for a predetermined amount of time) and the helix in the right portion of FIG. 3C illustrates the position of the helix in FIG. 3B after the user activates the right arrow button three times (or holds down the right arrow button for a predetermined amount of time). As illustrated in FIG. 3B and FIG. 3C, as a user causes segments of the helix to be selected (e.g., activates left and right arrow buttons), the helix rotates about a vertical axis which causes new segments to appear in a viewing area (e.g., segments 18, 28-30, 41, 51-53, 64, and 74-76, as shown in the right portion of FIG. 3C), different segments to be present in the foreground (e.g., segments 12-20, 35-43, and 58-66 as shown in the right portion of FIG. 3C), and different icons to be presented in the background (e.g., segments 22-30, 45-53, and 68-76).

In the example illustrated in FIG. 3B and FIG. 3C, three activations of the right arrow button cause twelve unique segments to be presented in the viewing area and may cause other segments to move into a position such that they may be brought to the attention of a user. FIG. 3D illustrates the position of the helix in FIG. 3B after the user activates the left arrow button three times (or holds down the right arrow button for a predetermined amount of time). As illustrated in FIG. 3D, three activations of the left arrow button cause twelve unique segments to be presented in the viewing area and may cause other segments to move into a position such that they may be brought to the attention of a user.

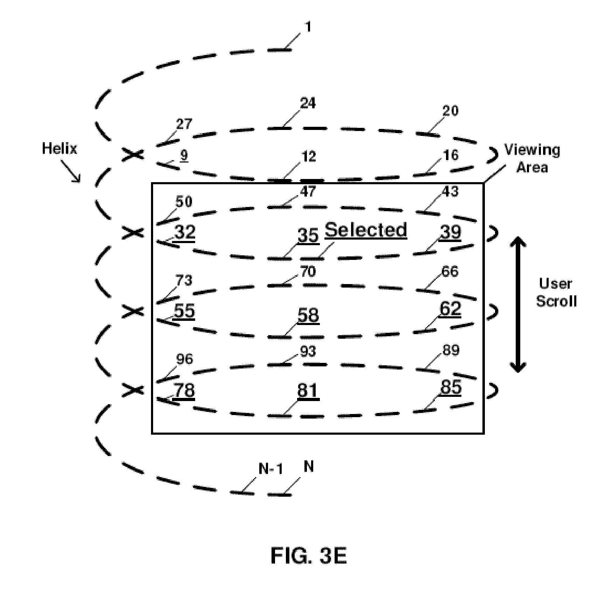

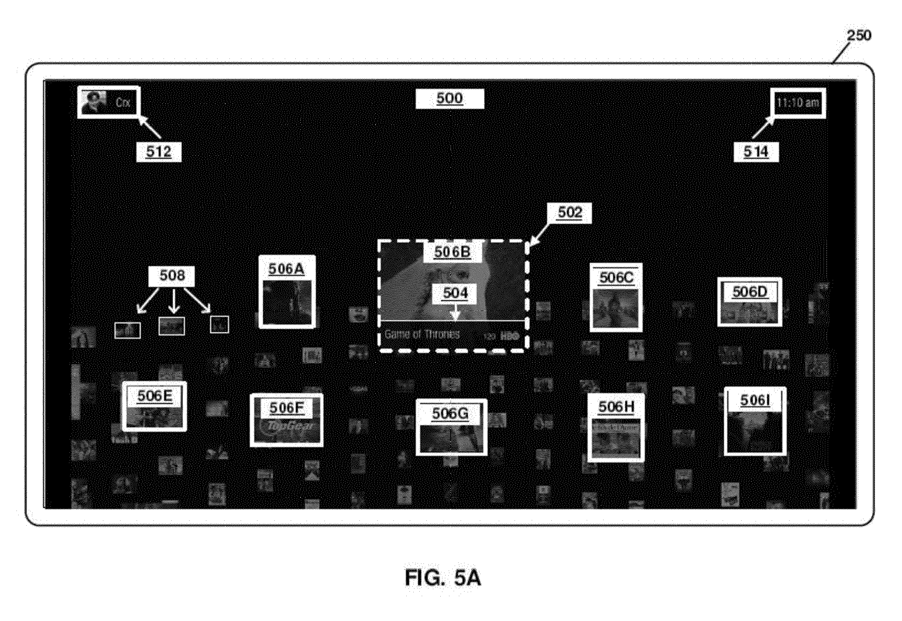

As described above, a helix shape may also allow for fast and efficient skipping of items in an ordered list by enabling a user to jump between parallel rows. FIG. 3E illustrates an example where a user jumps between rows. FIG. 3E illustrates the position of the helix in FIG. 3B after the user activates a down or up arrow button. In the example illustrated in FIG. 3E, segments 9-17 and 19-27 move out of the viewing area and segments 78-86 and 88-96 move into the viewing area. Thus, in the example illustrated in FIG. 3E, one activation of a vertical arrow button causes eighteen new segments to be presented to a user. As described above and illustrated below with respect to FIGS. 5A-5D, background items may appear smaller than foreground items (e.g., foreground segments in FIGS. 3A-3E may be associated with a single item of content and background segments in may be associated with multiple items of content), thereby increasing the number of new items that are presented to a user as a result of selecting items of content in the foreground. In this manner, a helical arrangement of icons enables a user to accomplish a task of selecting a specific item of content while updating other items of available content that are presented to a user.

As described above, a helix shape allows for additional functionality not supported by a grid or list based electronic programming guide, e.g., three-dimensional navigation is supported by the helix shape. It should be noted that although the examples in FIGS. 3A-3E are described with respect to four direction ("Up", "Down", "Left" and "Right") foreground navigation, which may enable a helix shape to be navigated using a standard four directional remote input, in other examples, a helix could be navigated using a mouse or touch screen device. For example, the entire helix may be scrolled or the list may be advanced via direction buttons, mouse drags and clicks as well as swiping gestures on a touch pad. In one example, single items within the helix may be instantly navigated to by clicking or touching on the item. In one example, this would advance the helix to the specified items index position.

A helix shape may support further additional types of navigation. For example, "Towards" and "Away" navigation. As described above, a user may move a virtual camera toward (e.g., including within) or away from a helical structure. In one example, spin buttons 292 may enable a user to rotate a helix by various degrees based on how long a user activates a spin button. In one example, activation of a spin button may cause a helix to rotate a by predetermined number of degrees (e.g., fifteen) and/or a predetermined number of icons (e.g., four). As described above, a helix may include a sequence of items of content arranged by category (e.g., movie genre). In one example, activation of spin buttons 292 may cause a first item of content in a category to become selected. In this manner, a user may be able to browse categories.

In addition or as an alternative to spin buttons causing a helix to rotate by various degrees, in an example where an I/O device includes a motion controller, a user's navigation movements may cause a helix to rotate by various degrees. Further, in an example where an I/O device includes a touchscreen, a user may execute a swipe command and thereby cause a helix to rotate based on the swipe command (e.g., faster and/or longer swipes cause more rotation). In this examples, rotation of a helix may stop when a first item of a new category is selected. Thus, there may be several ways for a user to change the speed and angle at which a helix shape rotates. In one example, a user may be able to invert a helix. That is, a helix may be flipped vertically degrees causing segment N to change position with segment 1.

FIGS. 4A-4B is an example of a graphical user interface that may be generated by a computing device to implement one or more techniques of this disclosure. Graphical user interface 400 represents an example of a graphical user interface that may be based on a helix structure. In one example, graphical user interface 400 may be presented to a user upon activation of helix button 291. As described above, helixes may include different types of content. In one example, successive activations of helix button 291 may cause different types of helixes to be displayed. For example, a helix including television shows organized by air times, a helix including video on demand (VOD) content, a helix including sporting events, and/or a helix including content recommended for a user may be displayed upon successive activations of helix button 291.

As illustrated in FIGS. 4A-4B, graphical user interface 400 includes icons representing items of content 406A-406I and icons representing items of content 408, where icons 406A-406I are located in the foreground of graphical user interface 400 and icons 408 are located in the background of graphical user interface 400. As illustrated in FIGS. 4A-4B foreground icons 406A-406I are larger than background icons 408. In one example, icons may have respective aspect ratios based on content type. For example, standard definition content may be represented by icons with a 4x3 aspect ratio and high definition content may be represented by icons with a 16x9 aspect ratio. Further, in one example, icons may be square or may have a 3x4 aspect ratio (e.g., movie poster icon).

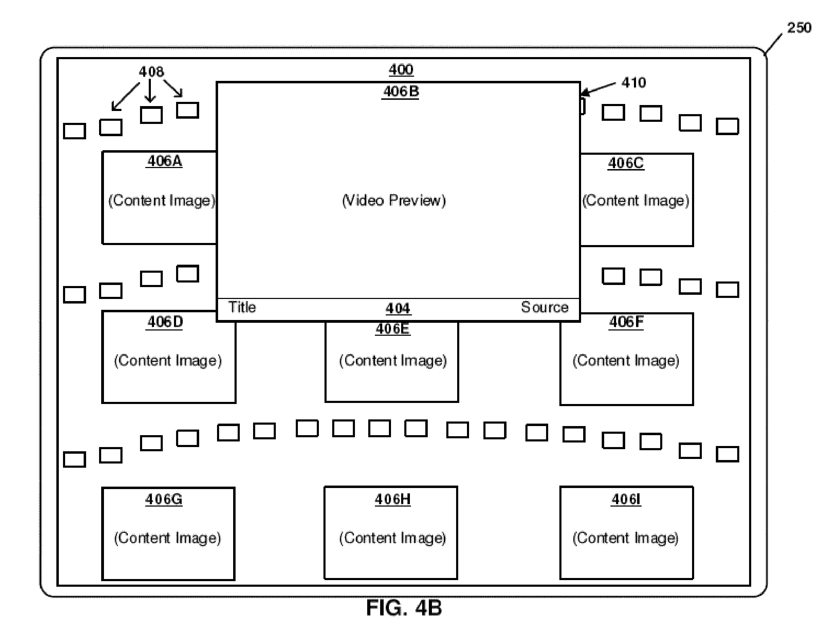

As illustrated in FIG. 4A, icons located in the foreground include a selected item of content 402. As further illustrated in FIG. 4A, a selected item of content is larger in size than unselected items of content and includes source and title information 404. Further, a selected icon may be available for additional selection. For example, selected content may morph into a preview video, if available. FIG. 4B illustrates an example of a video preview window 410. Graphical user interface 600 illustrated in FIGS. 6A-6B further illustrate how selected content may be present in a video preview window. Graphical user interface 400 may be configured such that each icon is capable of multiple types of selection. In one example, graphical user interface 400 may be configured to enable four types of selection for each icon: a level that enlarges or highlights an icon, a level that provides information associated with content (e.g., cast and crew information), a level that provides a preview of content associated with an icon (e.g., a trailer), and a level that provides full access to content associated with an icon (e.g., play movie or television show in a full screen viewing mode or launch an application).

In one example, a computing device may be configured to enable a user to select one of the plurality of icons using an I/O device. As described above, an I/O device may include a push-button remote control, a motion based remote control, a device including a touch-sensitive screen, a device including a track pad, a mouse, a keyboard, a microphone, video camera, a motion sensor, and/or an advanced user input device, such as a smart phone or a tablet computing device. A user may be able to use an I/O device to move a cursor, where a cursor may be a visible or invisible cursor, to the location of an icon and remaining on the icon for a predetermined amount of time may be associated with one level of selection and activation of one or more controls on an I/O device (e.g., a single tap or a double tap on a touch-sensitive display) may be associated with other levels of selection (e.g., display information or provide a preview). In the example illustrated in FIGS. 4A-4B, a user may be able to select each of icons 406A-406I and 408 using any of the selection techniques described herein. Upon selection of any of icons 406A-406I and 408, graphical user interface 400 may cause different items of content to become selected.

FIGS. 5A-5D is an example of a graphical user interface that may be generated by a computing device to implement one or more techniques of this disclosure. FIGS. 5A-5D further illustrates how icons may be visually associated with items of content and how a user may be able to select icons in the foreground which causes other icons to be presented to a user. Graphical user interface 500 includes a selected icon 502 which is larger than other icons and includes title and source information 504, icons representing items of content 506A-506AA and icons representing items of content 508, where icons 506A-506AA are located in the foreground of graphical user interface 500 and icons 508 are located in the background of graphical user interface 500. Each of icons 506A-506AA and icons 508 may be available for multiple levels of selection. Further, graphical user interface 500 includes icon 512 that identifies a user whose profile is currently selected and icon 514 that identifies the current time. As described above, icons may be presented based on recommendations for a particular user. Thus, icon 512 may enable a user to determine how graphical user interface 500 is currently being presented. In one example, computing device 200 may be configured to present individual pieces of content based on any and all combinations of consumption, behavior, and environment. In one example, consumption may include content a user has accessed or is accessing. In one example, behavior may include user usage information such as, for example, how fast the user changes channels, how often the user skips commercials, how frequently a user accesses content through a computing device. In one example, environment may include time (e.g., hour, day, month, or year) and location (e.g., home, car, or airport) of a computing device.

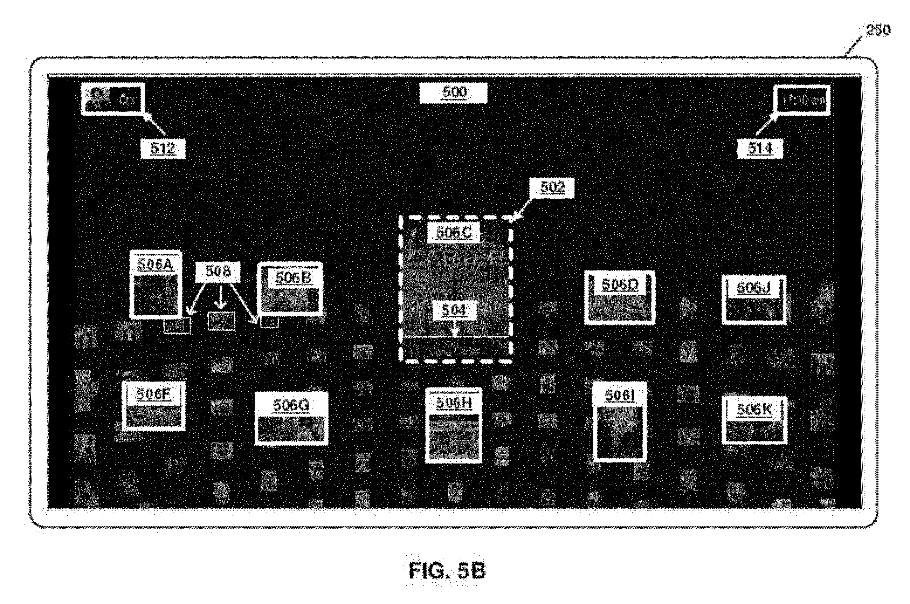

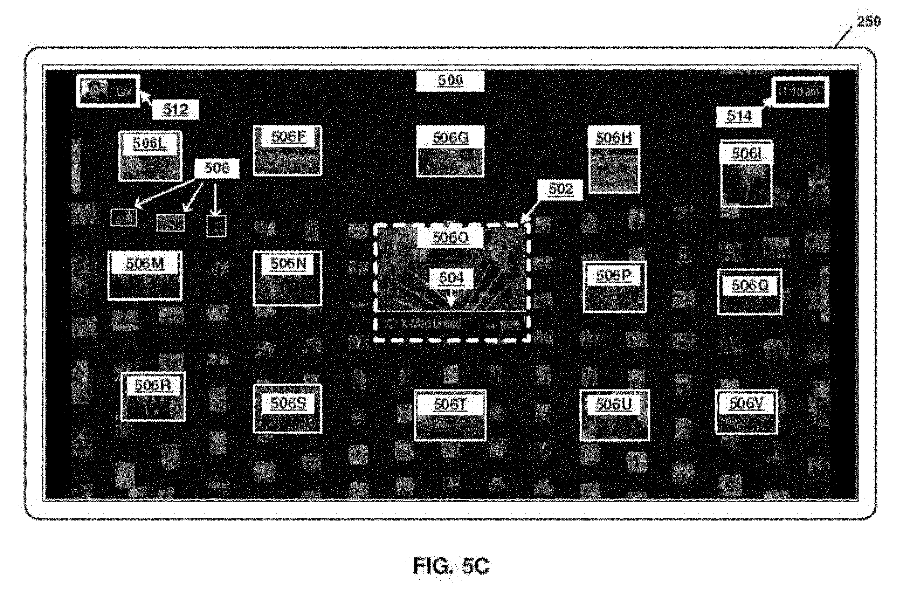

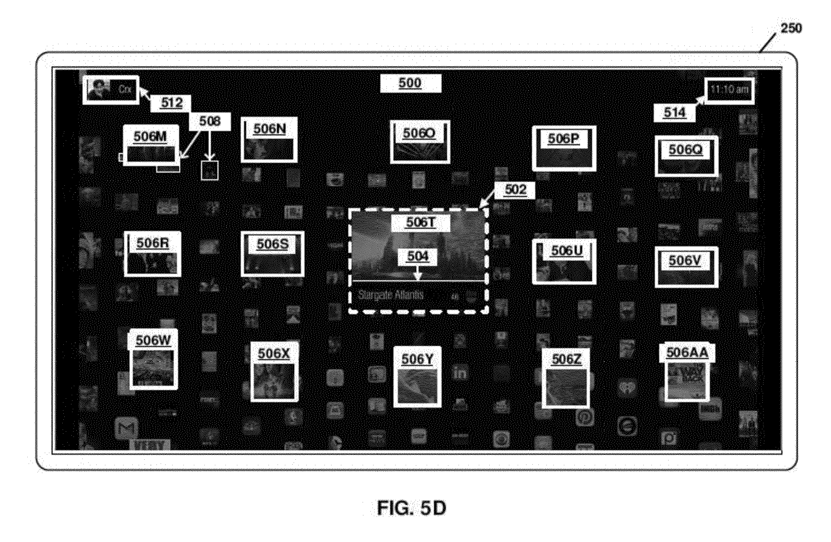

Referring to FIGS. 5A-5B, FIG. 5A illustrates the initial presentation of graphical user interface 500 to a user (e.g., a graphical user interface that is presented when a user initially logs on to a computing device and/or activates helix button 291). FIG. 5B illustrates graphical user interface 500 after a user changes the selected icon from icon 506B to 506C (e.g., activates right arrow button). FIG. 5C illustrates graphical user interface 500 after a user changes the selected icon from icon 506B to icon 5060 (e.g., activates down arrow button twice). FIG. 5D illustrates graphical user interface 500 after a user changes the selected icon from icon 5060 to icon 506T (e.g., activates down arrow). As illustrated in FIGS. 5A-5D, as a user causes a different icon to be selected new icons appear in a viewing area, different icons are presented in the foreground, and different icons are presented in the background. In this manner, graphical user interface 500 enables a user to navigate to an item of content while presenting additional items of available content to a user.

In one example, in addition to foreground navigation, graphical user interface 500 may enable background navigation. That is, a user may be able to cause an item of content in the background to be selected and/or presented in the foreground. In one example, where graphical user interface 500 is displayed on a secondary device including touch screen capabilities, a user may be able to tap and select any item of content in graphical user interface 500 at any time, which may reposition a helical structure accordingly. Further, in one example, upon activation of spin buttons 292, a helix may rotate 180 degrees and thereby cause icons in the background to move into the foreground. Referring to FIG. 5A, in one example, upon activation of a spin button 292, the background icon centered between 506B and 506G may become the selected icon. In this manner, graphical user interface 500 enables a user select items of content arranged based on a helical structure.

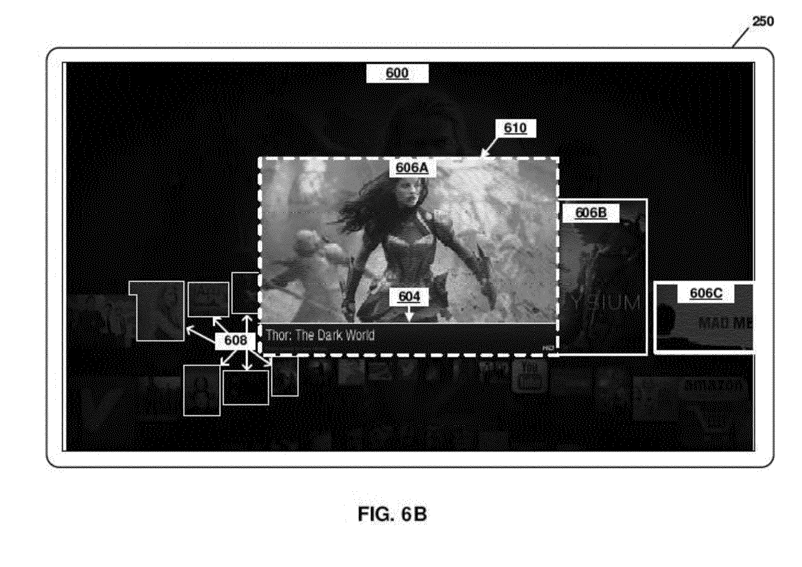

As described above, a graphical user interface may present icons to a user based on a helical structure by displaying half of a helical structure. That is, a user may change a viewing perspective with respect to a helical structure e.g., position a virtual camera in the center of the helix. FIGS. 6A-6B is an example of a graphical user interface that may be generated by a computing device to implement one or more techniques of this disclosure. FIGS. 6A-6B illustrates a graphical user interface that may be implemented by enabling a user to change a viewing perspective with respect to a helical structure. Graphical user interface 600 includes a selected icon 602 which is larger than other icons and includes title and source information 604, icons representing items of content 606A-606C and icons representing items of content 608, where icons 606A-606C are located in the foreground of graphical user interface 600 and icons 608 are located in the background of graphical user interface 600. Each of icons 606A-606C and icons 608 may be available for multiple levels of selection. Further, as illustrated in FIG. 6B additional selection may cause a preview window 610 to be displayed. Icons included in graphical user interface 600 may be selected in manner similar to that described above with respect to FIGS. 3A-5D.

Further, in one example, a user may change which items are presented in graphical user interface 600 by changing a viewing perspective. For example, a user may zoom-in, zoom-out, look down, look up, look left, look right, and perform pans, with a virtual camera which may cause different icons to be displayed. In one example, spin buttons 292 may cause the helix to rotate and navigational arrow buttons 291 may cause a virtual camera located in the center of the a helical structure to look in a different direction. In this manner, graphical user interface 600 enables a user select items of content arranged based on a helical structure.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, which is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method of enabling content selection, the method comprising:
displaying icons representing items of content in a viewing area, wherein the icons are arranged in a helical structure; and
enabling a user to select an icon from the helical structure.

2. The method of claim 1, wherein displaying icons representing items of content in a viewing area includes displaying icons in a foreground of a three-dimensional space and displaying icons in a background of the three-dimensional space.

3. The method of claim 2, wherein enabling a user to select an icon from the helical structure includes enabling a user to select icons displayed in the foreground of the three-dimensional space.

4. The method of claim 2 or 3, wherein selecting icons displayed in the foreground of the three-dimensional space causes new icons to be displayed in the background of the three dimensional space.

5. The method of any one of claims 2 to 4, wherein enabling a user to select icons displayed in the foreground of the three-dimensional space includes enabling a user to select an icon in an adjacent position to a currently selected icon user directional navigation.

6. The method of claim 1 or 2, wherein enabling a user to select an icon from the helical structure includes enabling a user to rotate the helical structure.

7. The method of any one of claims 1 to 6, wherein displaying icons representing items of content in a helical structure includes displaying icons according to an ordered list.

8. The method of claim 7, wherein the ordered list is organized according to categories.

9. The method of claim 7, wherein the ordered list is ordered based on content recommendations.

10. A device for enabling content selection comprising one or more processors configured to:
display icons representing items of content in a viewing area, wherein the icons are arranged in a helical structure, wherein displaying icons representing items of content includes displaying icons in a foreground of a three-dimensional space and displaying icons in a background of the three-dimensional space; and
enable a user to select an icon from the helical structure.

11. The device of claim 10, wherein enabling a user to select an icon from the helical structure includes enabling a user to select icons displayed in the foreground of the three-dimensional space, wherein selecting icons displayed in the foreground of the three-dimensional space causes new icons to be displayed in the background of the three dimensional space.

12. The device of claim 10 or 11, wherein enabling a user to select icons displayed in the foreground of the three-dimensional space includes enabling a user to select an icon in an adjacent position to a currently selected icon user directional navigation.

13. The device of any one of claims 10 to 12, wherein enabling a user to select an icon from the helical structure includes enabling a user to rotate the helical structure.

14. The device of any one of claims 10 to 12, wherein displaying icons representing items of content in a helical structure includes displaying icons according to an ordered list.

15. The device of claim 14, wherein the ordered list is organized according to categories or content recommendations.
